# EUROPEAN PATENT APPLICATION

(11) **EP 3 950 787 A1**
(43) Date of publication of application: **09.02.2022**
(21) Application number: 20189350.0
(22) Date of filing: 04.08.2020
(51) Int. Cl.: C08G 81/02, C08F 8/32, C08F 8/44, C08F 8/48, B01F 17/00

(54) **QUATERNIZED COMB POLYMERS**

(71) Applicant: CliQ SwissTech (Netherlands) B.V., 9747 AN Groningen (NL)
(72) Inventor: SLAGT, Vincent Friso, 9401 PV Assen (NL); LA CROIS, René Marcel, 9982 LG Uithuizemeeden (NL); VAN PEY, Detlef, 51377 Leverkusen (DE)
(74) Representative: Fabry, Bernd

(57) **Abstract**

Suggested are new optionally quaternized comb polymer based on SMA or PS-PAA copolymers and their use as dispersants for lacquers and paints.

## Description

### AREA OF THE INVENTION

The present invention belongs to the area of lacquers and paints and refers to new polymeric dispersants, a method for their preparation and their use.

### TECHNOLOGICAL BACKGROUND

It is known from the state of the art that comb copolymers can be used as wetting and dispersing agents that can, however, only be used with the desired effect either in an aqueous system or in an organic solvent system in accordance with their structure.

Prior art teaches that solubility properties can be adjusted by selection of the co-monomers in the side chains so that solubility is either provided in an aqueous system or in an organic solvent system. Thus, comb copolymers, in which the side chains are composed of polyacrylates or polyesters and are modified with phosphoric acid ester groups, amine groups, salts of amines or quaternary ammonium salts as end groups, and whose solubility either in water or in an organic solvent can be adjusted by selection of the co-monomers in the side chains. However, a solubility both in an aqueous medium and in an organic solvent cannot be adequately adjusted herewith, and therefore the use of such comb copolymers as wetting and dispersing agents, e.g. in color filter production processes, can only lead to excessively long processing times.

Comb copolymers based on styrene/maleic anhydride resins (SMA resins), which have polyether side chains but no adhesion group have the further disadvantage that they cannot adequately stabilize organic pigments in formulations containing solvent. Polyether side chains modified with amine oxide groups may improve wetting properties, however does not always meet the requirements for a dispersion of pigments that is stable in storage. This also applies to the use of comb copolymers based on SMA resins that can have polyether side chains and amino groups, which are converted to salts with unsaturated carboxylic acids, since the described adhesion groups do not represent adhesion groups that are suitable for all application areas. An additional consideration with the use as wetting and dispersing agents is that as a result of salification with an unsaturated carboxylic acid there is the risk of polymerisation and thus an undesirable salification of the wetting or dispersing agent during storage.

### RELEVANT STATE OF THE ART

Polymers, particularly polymers with comb structure, useful as dispersants are already known from the state of the art:

EP 0688796 B1 (CLARIANT) relates to dispersants representing reaction products of polyetheramines with polymers containing dicarboxylic anhydride groups, which contain 20-80, preferably 40-60, mol percent of bivalent structural units A and/or C and, if required, B (A) (B) (C) in which R1 and R2, independently of one another, are hydrogen or methyl, a and b are equal to zero or one and a+b is equal to one, Y is X or NRR3, X is -OH, -O-C1-30-alkyl, NR3R4 or -O(-)N(+)R3R4, R3 and R4, independently of one another, are hydrogen, C6-C40-alkyl or R, R is with the proviso that at least 1 mol percent of the anhydride groups bonded to the polymer have reacted with a polyetheramine, Z is C2-C4-alkyl, n is a number from 1 to 1000, R5 is hydrogen, C1-C30-alkyl, C5-C12-cycloalkyl or C6-C30-aryl and R6 is hydrogen or C1-C4-alkyl, preferably methyl, and 80-20 mol percent, preferably 60-40 mol percent of bivalent structural units D (D) in which R7 is hydrogen or C1-C4-alkyl and R8 is C1-C60-alkyl or C6-C18-aryl.

EP 2132237 B1 (LUBRIZOL) discloses copolymers useful as dispersants comprising a polymer derived from (a) monomer (A), wherein monomer (A) comprises either an a-olefin or a vinyl aromatic monomer; (b) monomer (B), wherein monomer (B) is derived from maleic anhydride or maleic acid, which contains less than 20 mol percent of monomer (B), based on the combined mole percent of (A) and (B), wherein at least a portion of the anhydride or dicarboxylic acid groups derived from monomer (B) are subsequently reacted with: (i) a compound containing at least one tertiary or heterocyclic amine site and at least one additional group capable of reacting with dicarboxylic acid, or anhydride functional groups, and (ii) a polyetheramine.

EP 2274340 B1 (CLARIANT) concerns reaction products of amines with polymers containing dicarboxylic acids anhydride groups, method for the production thereof and use thereof as a dispersing additive for pigments. Also disclosed are solid pigment preparations containing said reaction products.

EP 2723779 B1 (BYK) relates to a copolymer whose overall structure as such and/or an optionally present segment A having at least 10 bivalent structural units in the overall structure contains surface-active bivalent structural units present in the form of long hydrocarbon chains among other forms. The copolymer is useful as a surface-active additive, especially also in conjunction with nonpolar media.

EP 2125910 B1 (BYK) discloses modified comb copolymers comprising special structural units, which are produced by converting SMA resins and optionally special copolymers with an AB block copolymer structure with a mixture of at least one polyalkylene oxide monoamine and at least one amino alcohol, with a mixture of at least one polyalkylene oxide monoamine and at least one N,N-disubstituted diamine or a mixture of at least one polyalkylene oxide monoamine, at least one N,N-disubstituted diamine and at least one polymer selected from the group comprising monohydroxy-terminated polyalkylene oxides, monohydroxy-terminated polyesters and monohydroxy-terminated block copolymers comprising polyalkylene oxide and polyester blocks, and their monohydroxy-terminated side chains are converted to phosphoric acid ester groups or their N,N-disubstituted amino-terminated side chains are converted to quaternary ammonium salts, and their use as wetting and dispersing agents.

EP 2864373 B1 (BYK) relates to a copolymer that can be used as wetting agent and dispersant and contains (i) 40-73 mole percent of a base structural unit (A) and (ii) 27-60 mole percent of a substituted dicarboxylic acid derivative structural unit (B), the structural unit (B) containing species having a bisamide structure and species having quaternized amino groups.

### PROBLEM TO BE SOLVED

Object of the present invention has been providing wetting and dispersing agents available that besides an excellent stabilization of solid dispersions, in particular pigment dispersions, have an excellent solubility both in aqueous media and in organic media in order to meet the increased requirements for wetting and dispersing agents in many fields of application such as universal tinting pastes, pigment surface modification for the production of easy to process pigments or color resists for color filters. In particular, in the case of these requirements a very low viscosity of the pigmented paint is also required, which can generally only be achieved with a wetting and dispersing agent with an extremely good stabilization of the pigment dispersion also during storage.

Therefore, it was an object of the present invention to provide comb copolymers, which are highly soluble in aqueous media as well as in organic media and with which solid dispersions are obtained, showing low viscosity even after temperature storage and improved color development and tinting strength compared to other comb polymers already found in the market.

### DESCRIPTION OF THE INVENTION

In a first embodiment the present invention refers to polymers obtainable or obtained by the following steps:
(a) providing at least one copolymer of
   (a1) styrene and
   (a2) at least one unsaturated monomer;
(b) providing at least one amino polyalkyleneglycol ether and optionally
(c) providing at least one further compound selected from the group consisting of
   (c1) polyalkylene glycol ethers,
   (c2) diamines, and
   (c3) quaternary ammonium compounds;
(d) reacting components (a), (b) and optionally (c) in order to obtain an intermediate pre-polymer;
(e) providing at least one further reactant selected from the group consisting of
   (e1) aromatic carboxylic acids,
   (e2) amidoamines,
   (e3) imino compounds,
   (e4) glycidyl ethers,
   (e5) polyalkyleneglycol ethers,
   (e6) betaines and
   (e7) quaternary ammonium compounds; and
(f) reacting said first intermediate pre-polymer with at least one further reactant (e) to obtain the final product.

Surprisingly it had been found that the polymers according to the present invention match with the complex performance profile as described above. They are highly soluble in aqueous media as well as in organic media and with which solid dispersions that are low-viscosity and stable in storage are obtained as wetting and dispersing agents and show superior performance when compared to other comb polymers already found in the market. In particular, improved storage stability particularly at higher storage temperatures of about 30 °C and above is obtained.

### Polymer backbone (compound a)

The polymers of Claim 1, wherein the copolymers of styrene and at least one unsaturated monomer (compound a) represent copolymers of styrene and (meth)acrylic acid and/or maleic acid anhydride. Particularly preferred are the following structures:

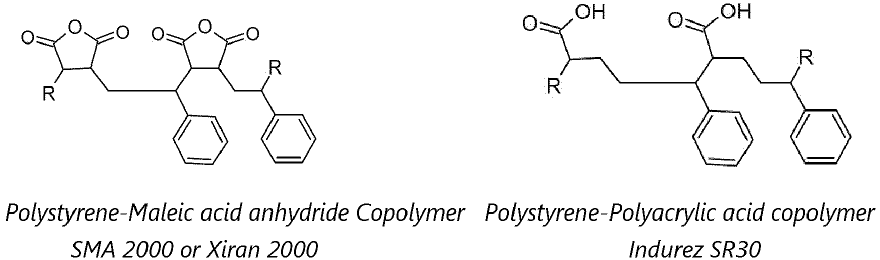

### Amino polyalkylene glycol ethers (compound b)

Suitable amino polyalkylene glycol ethers (compound b) preferably follow formula (II)

R¹(OCH₂CHR²)ₙ(CH₂)ₘCHR³-NH₂ (II)

in which R¹, R² and R³ individually stand for hydrogen or an C₁-C₄ alkyl group, n represents an integer of from 5 to 50 and m stands for zero, 1 or 2. Preferably R¹ and R³ stand for methyl, R² for hydrogen and the sum (n+m) for integers of from 25 to 40. Preferred molecular weights of the amino polyalkylene glycol ethers range from 1.500 to 2.500 Dalton. Particularly preferred is the following structure:

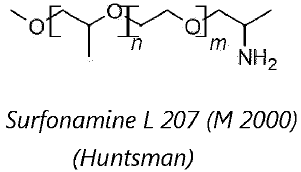

### Additional reaction components (compound c)

### Polyalkylene glycol ethers

Suitable polyalkyleneglycol ethers (compound c1) preferably follow formula (III)

R¹(OCH₂CHR²)ₙH (III)

in which R¹ stands for hydrogen or an C₁-C₄ alkyl group and n represents an integer of from 5 to 50. Preferably R¹ stands for methyl, R² for hydrogen and n for integers from 25 to 40. Preferred molecular weights of the polyalkylene glycol ethers range from 1.500 to 2.500 Dalton. Particularly preferred is the following structure:

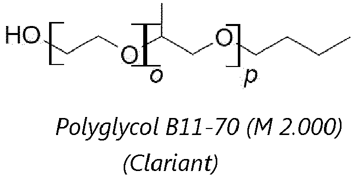

The same compounds illustrate the nature of the derivatization products (e5).

### Diamines

Suitable diamines (compound c2) preferably follow formula (IV)

NH₂(CH₂)ₚNR⁴R⁵ (IV)

in which R⁴ and R⁵ individually stand for hydrogen or a C₁-C₁₀ alkyl group or form a hetero-aromatic ring system with 5 or 6 members, optionally incorporating at least one further hetero atom selected from nitrogen and oxygen, and p stands for an integer of from 1 to 10. Preferably R⁴ and R⁵ stand for methyl and p for an integer of 2 to 4. Particularly preferred are dimethylamino propylamine (DMAPA) and the following structures:

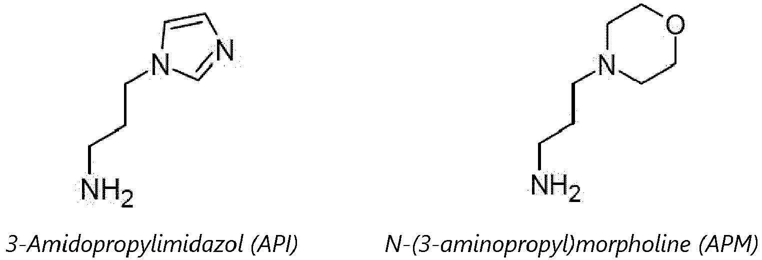

### Quaternary ammonium compounds

Suitable quaternary ammonium compounds (compound c3) preferably follow formula (V)

[R⁶R⁷R⁸N⁺R⁹] X⁻ (V)

in which R⁶, R⁷ and R⁸ individually stand for an alkyl group having 1 to 10, preferably 1 to 5 carbon atoms, R⁹ stands for an hydroxy-substituted alkyl or acyl group having 2 to 20, preferably 5 to 20 carbon atoms and X represents halogenide, hydroxyl or carboxylate. Particularly preferred are the following structures:

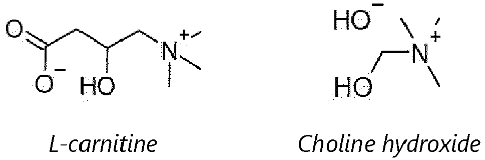

The same compounds illustrate the nature of the quaternization products (e7).

### Derivatization and quaternization compounds (compounds e)

### Aromatic acids

Suitable aromatic acids (compound e1) are selected from the group consisting of benzoic acid and salicylic acid.

### Amidoamines

Suitable amidoamines (compound e2) preferably follow formula (VI)

R¹⁰CO-NH(CH₂)_{q}NR¹¹R¹² (V)

in which R¹⁰CO stands for a linear or branched, saturated or unsaturated optionally hydroxy-substituted C₆-C₂₂ acyl radical, R¹¹ and R¹² individually stand for hydrogen or a C₁-C₁₀ alkyl group or form a hetero-aromatic ring system with 5 or 6 members, optionally incorporating at least one further hetero atom selected from nitrogen and oxygen, and q stands for an integer of from 1 to 10, preferably 2 to 5. Particularly preferred is the following structure:

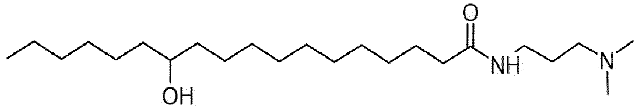

### Imino compounds

Suitable imino compounds (compound e3) preferably follow formula (VI)

HN[(CH₂)ₜNR¹³R¹⁴]₂ (VII)

in which R¹³ and R¹⁴ individually stand for hydrogen or a C₁-C₁₀ alkyl group or form a hetero-aromatic ring system with 5 or 6 members, optionally incorporating at least one further hetero atom selected from nitrogen and oxygen, and t stands for an integer of from 1 to 10. Preferably 2 to 5. Particularly preferred is the following structure:

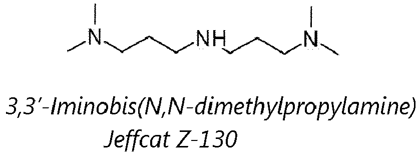

### Glycidyl ethers

Suitable glycidyl ethers (compound e4) preferably follow formula (VIII)

P-OR¹⁵ (VIII)

in which P stands for a 1,2-propyleneoxide group and R¹⁵ for a linear or branched, saturated or unsaturated optionally hydroxy-substituted alkyl or alkenyl group with 3 to 20, preferably 5 to 14 and more preferably 6 to 12 carbon atoms. Particularly preferred is the following structure:

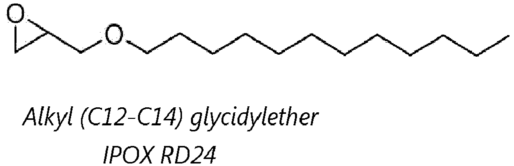

### Betaines

Suitable betaines (compound e6) preferably follow formula (IX)

[R¹⁶R¹⁷N⁺R¹⁸R¹⁹] X⁻ (IX)

in which R¹⁶ and R¹⁷ individually stand for an alkyl group having 1 to 5 carbon atoms, R¹⁸ stands for an alkyl group having 1 to 22 carbon atoms, R¹⁹ for an -(A)-COO⁻ or -(A)-SO₃⁻ group, A for an optionally hydroxy-substituted alkylene group having 1 to 5 carbon atoms and X represents halogenide, hydroxyl or carboxylate. Particularly preferred are the following structures:

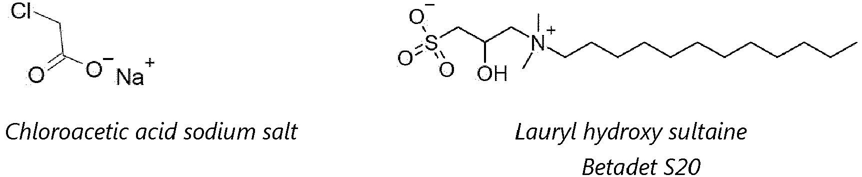

### Manufacturing process

Another object of the present invention refers to a corresponding process for making polymers, encompassing or consisting of the following steps:
(a) providing at least one copolymer of
   (a1) styrene and
   (a2) at least one unsaturated monomer;
(b) providing at least one amino polyalkyleneglycol ether and optionally
(c) providing at least one further compound selected from the group consisting of
   (c1) polyalkylene glycol ethers,
   (c2) diamines, and
   (c3) quaternary ammonium compounds;
(d) reacting components (a), (b) and optionally (c) in order to obtain an intermediate pre-polymer;
(e) providing at least one further reactant selected from the group consisting of
   (e1) aromatic carboxylic acids,
   (e2) amidoamines,
   (e3) imino compounds,
   (e4) glycidyl ethers,
   (e5) polyalkyleneglycol ethers,
   (e6) betaines and
   (e7) quaternary ammonium compounds; and
(f) reacting said first intermediate pre-polymer with at least one further reactant (e) to obtain the final product.

In the first step, the polymer backbone (compound a), is typically placed in a reactor under nitrogen atmosphere and the amino polyalkylene glycol compound (b) and optionally compound (c1 op c3) are added stepwise. The molar ratio between the components is typically
(a : b) = about 1 : (0.3 to 1), preferably about 1 : (0.5 to 0.8) and
(a : b : c) = about 1 : (0.3 to 0.8) : (0.3 to 0.8), preferably 1 : (0.4 to 0.6) : (0.4 to 0.6).

The reaction to form the intermediate ("pre-polymer") is typically carried out between about 50 and about 210 °C, preferably between about 80 and about 160 °C and more preferably between about 100 and about 120 °C. Also preferred is conducting the reaction at least over a part of the time under vacuum, for example about 30 to about 50 mbar. It is also an option to add an aprotic solvent such as ethyl acetate to reduce viscosity of the reaction mixture and remove the solvent later.

In the second step the intermediate is placed in the reactor, again preferably under a nitrogen atmosphere and the derivatization compound (e1 to e6) is added stepwise. The molar ratio is typically (intermediate : e) = about 1 : (0.3 to 1), preferably about 1 : (0.5 to 0.8). The reaction to form the final polymer is typically carried out between about 50 and about 210 °C, preferably between about 80 and about 160 °C and more preferably between about 100 and about 120 °C. Also preferred is conducting the reaction at least over a part of the time under vacuum, for example about 30 to about 50 mbar. In case derivatization takes place using a glycidyl ether progress of the reaction can be monitored by decrease of the epoxy number. It is also an option to add an aprotic solvent such as compound (b) to reduce viscosity of the reaction mixture.

While the process described so far is a typical two-step reaction providing the opportunity to isolate the intermediate, the reaction can also be conducted as a one-pot-process without isolating the intermediate pre-polymer of step (d).

For the avoidance of doubt it is expressively stated that with regard to the nature and the preference of the compounds to be used in aforementioned process, their combinations and related features reference is made to the sections above. Therefore, no repetition is necessary.

### PREFERRED INTERMEDIATES

In the following preferred intermediates are shown which also form objects of the present invention. The preparation of these intermediates is described in the experimental part of the specification. They can be identified by reference numbers.

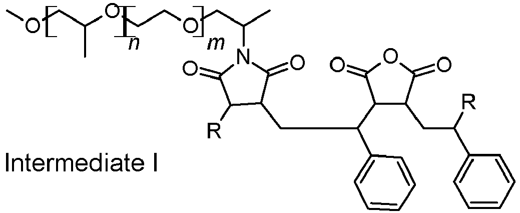

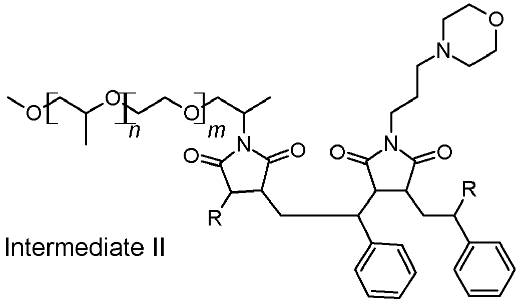

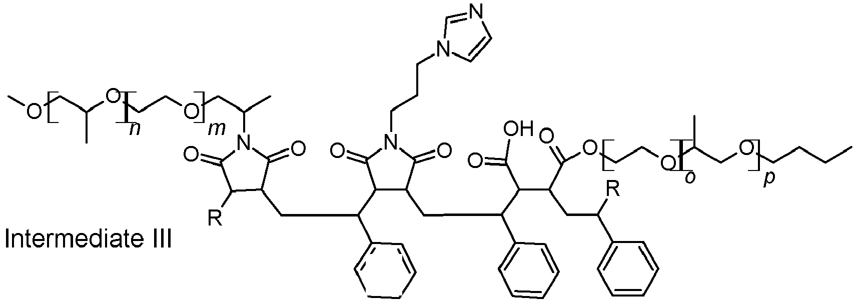

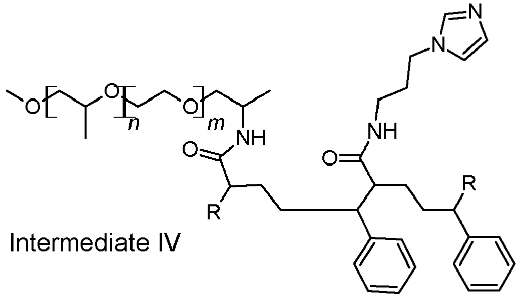

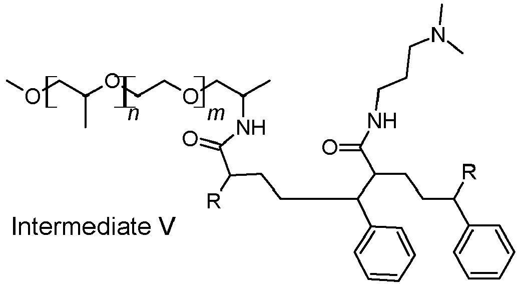

### PREFERRED POLYMERS

In the following preferred polymers obtained from the aforementioned intermediates are shown which also form objects of the present invention. The preparation of these polymers is described in the experimental part of the specification. They can be identified by reference numbers.

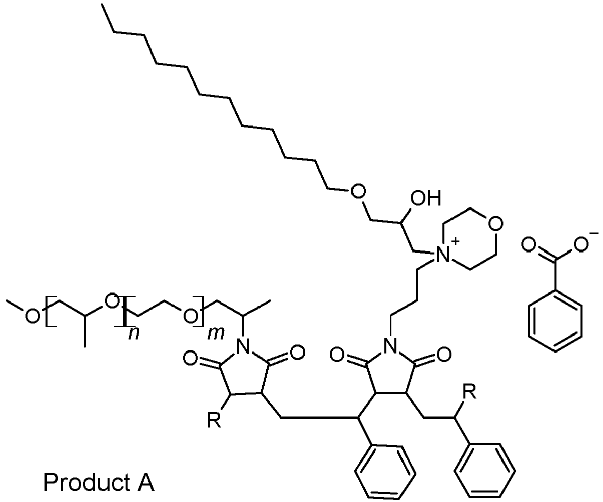

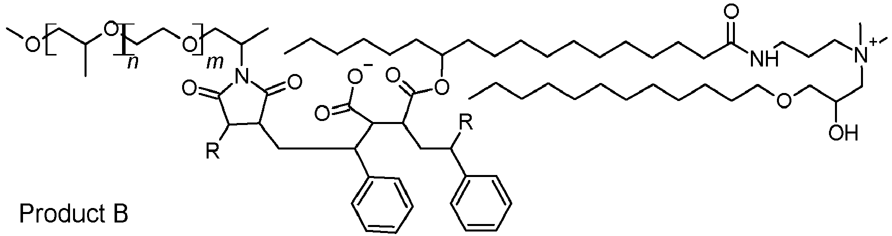

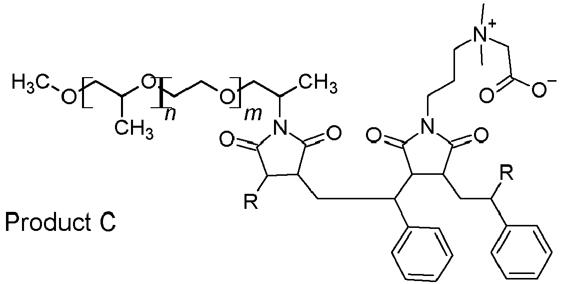

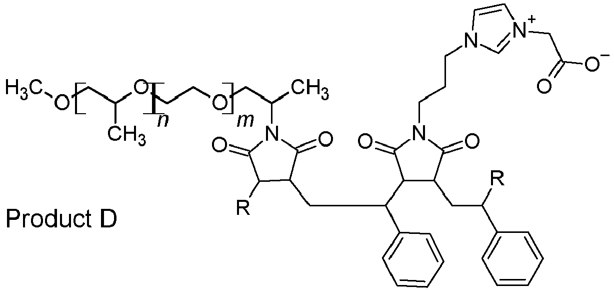

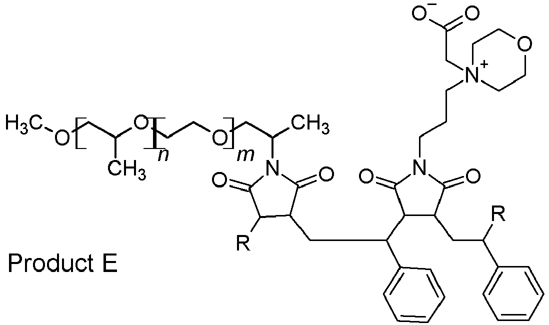

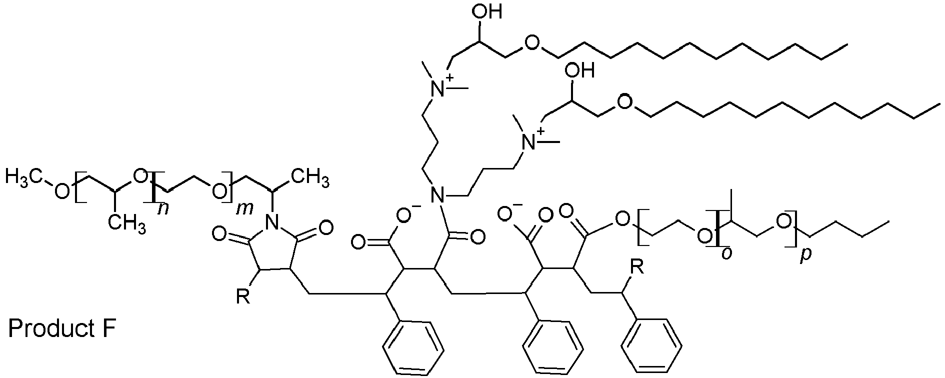

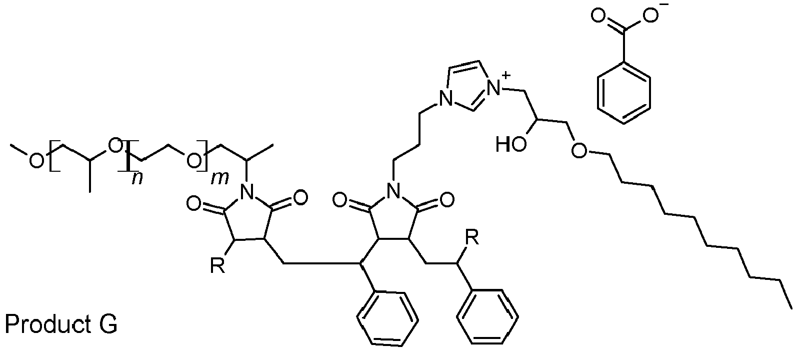

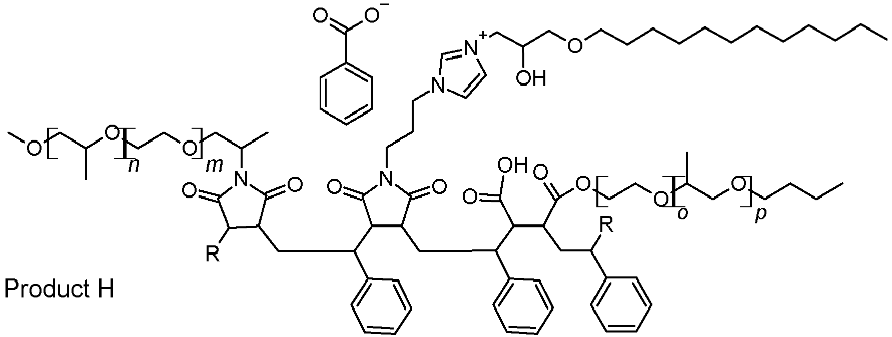

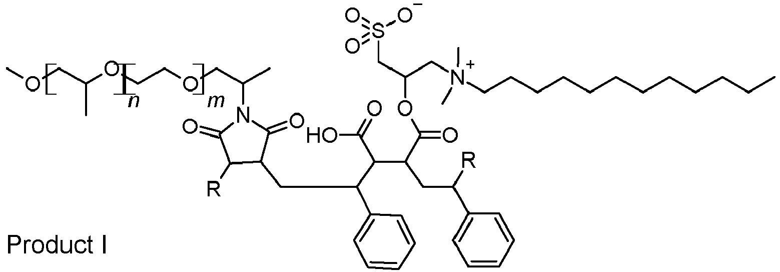

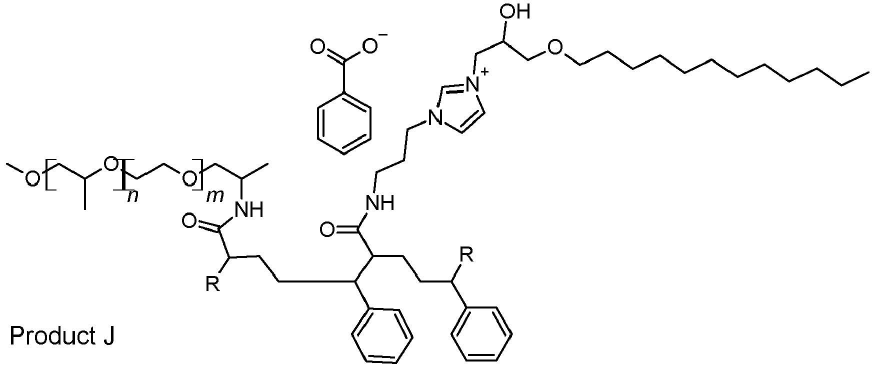

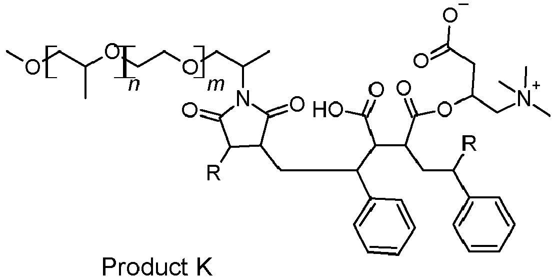

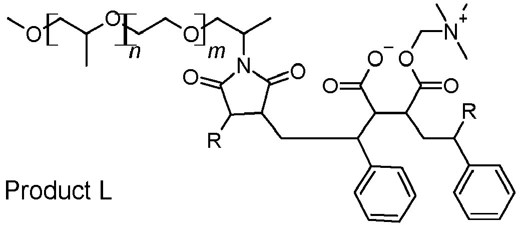

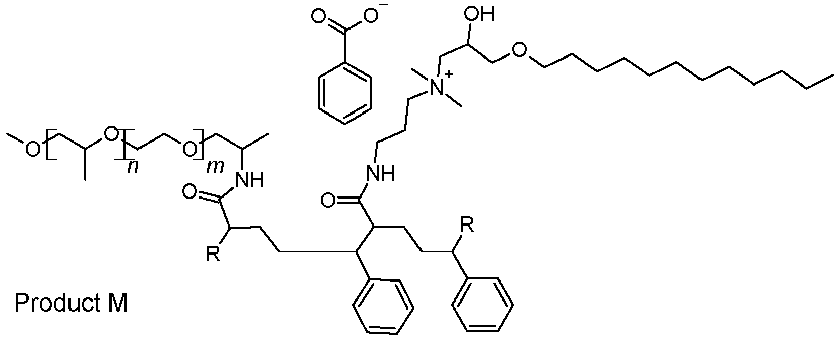

### INDUSTRIAL APPLICATION

Another object of the present invention is related to a method for dispersing a solid pigment in a liquid lacquer or paint encompassing or consisting of the following steps:
(i) providing a liquid lacquer or paint comprising solid pigments,
(ii) adding a working amount of at least one polymer as described above optionally under agitation.

A "working amount" means that the amount is sufficient to disperse the solid pigments in the liquid phase without visible separation for a period of at least 3 months. Such amount is typically about 0.1 to about 5 wt.-percent, preferably about 0.5 to 3 wt.-percent and more preferably about 1 to about 2 wt.-percent - referring to the polymer without solvent and calculated on the lacquer or paint composition.

Also claimed is the use of the polymers as described above as dispersants, particularly for liquid lacquers and paints.

### EXAMPLES

### Manufacturing Example 1

### Product based on SMA polymer, Surfonamine L207 and IPOX RD24

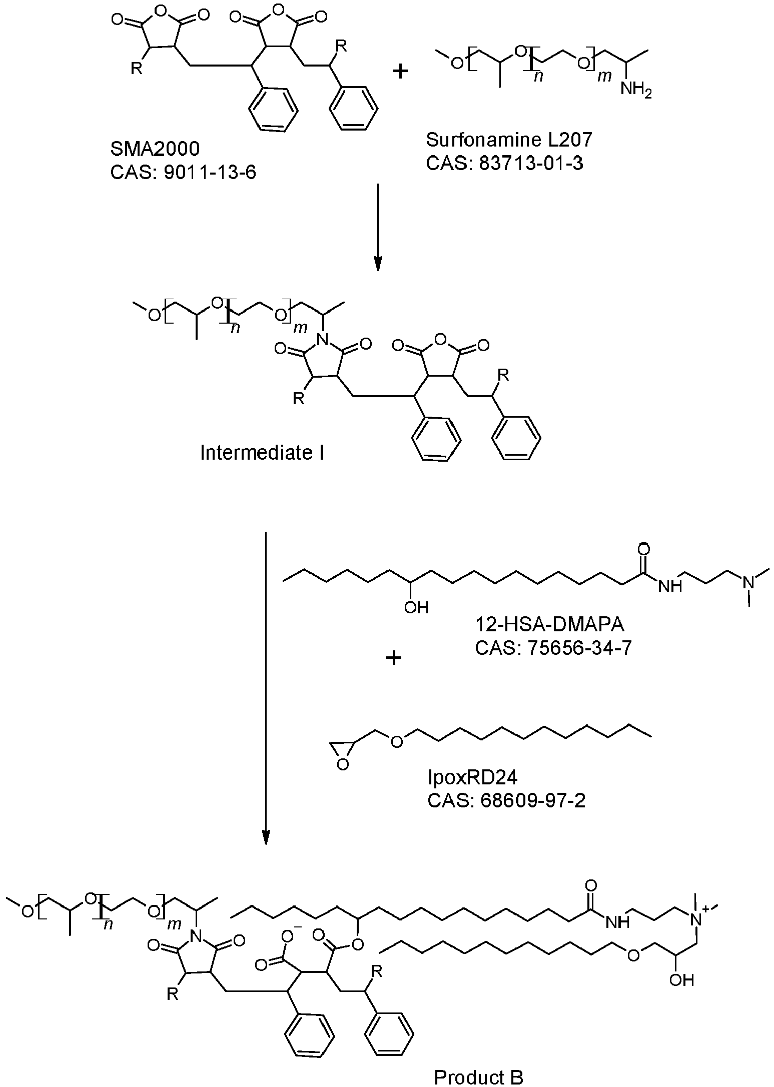

### Synthesis of intermediate I

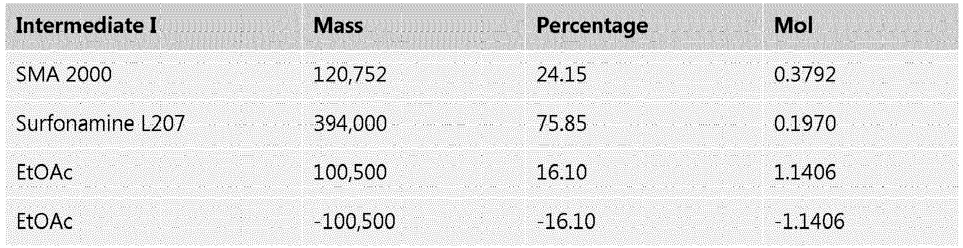

SMA 2000 was added in small batches over 2 minutes to EtOAc in the reactor under a nitrogen atmosphere. The mixture was heated to 60 °C and stirred for 15 minutes. Surfonamine L207 was added. Temperature was increased stepwise to 160 °C and all EtOAc was evaporated. Vacuum was applied slowly towards 45 mbar and the mixture was stirred for 2 hours. Subsequently the intermediate was cooled and canned.

### Synthesis of product B

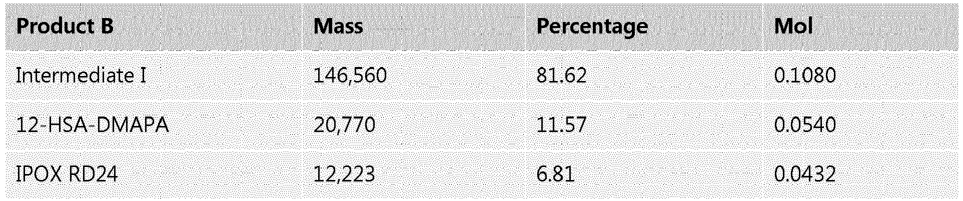

Intermediate I was mixed with 12-HSA-DMAPA and heated to 145 °C. IPOX RD24 was added and the reaction was followed by epoxy number (EEW: 2119 at t=0). After 1.15 hours EEW = 4251 was reached and reaction considered to be complete. The product was cooled and canned.

### Manufacturing Example 2

### Product based on SMA polymer, Surfonamine L207 and IPOX RD24

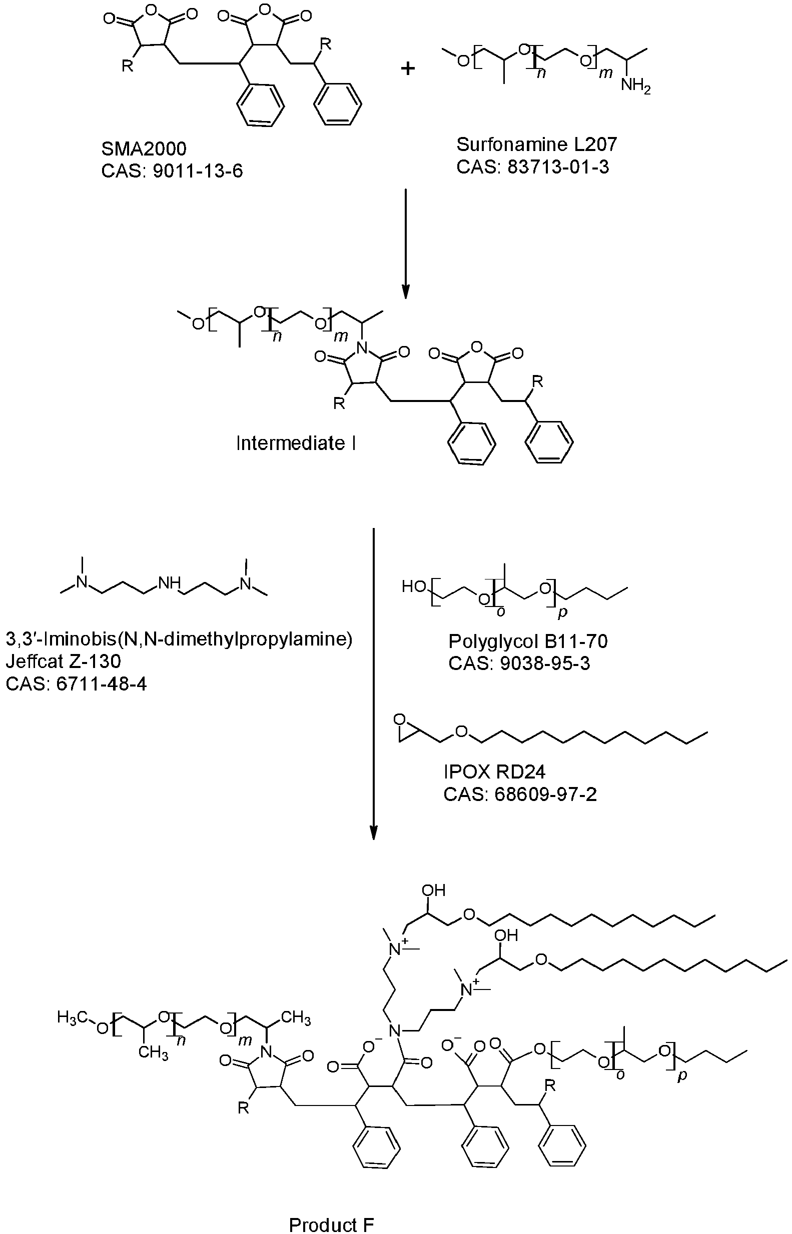

### Synthesis of product F

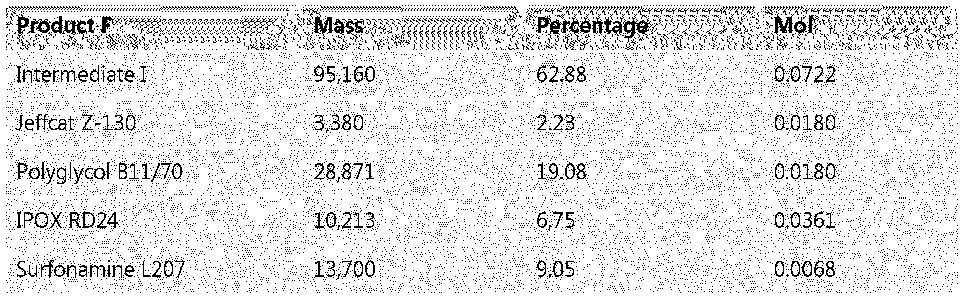

Intermediate I was heated to 100 °C. Jeffcat Z-130 and Polyglycol B11/70 were added. The mixture was stirred for 30 minutes and heated to 130 °C. IPOX RD24 was added and reaction followed by EEW. The mixture was heated for 1 hour at 130 °C and then cooled to 70 °C. Surfonamine L207 was added and the blend cooled and canned.

### Manufacturing Example 3

### Quaternized product based on SMA polymer, Surfonamine L207 and API - one pot reaction

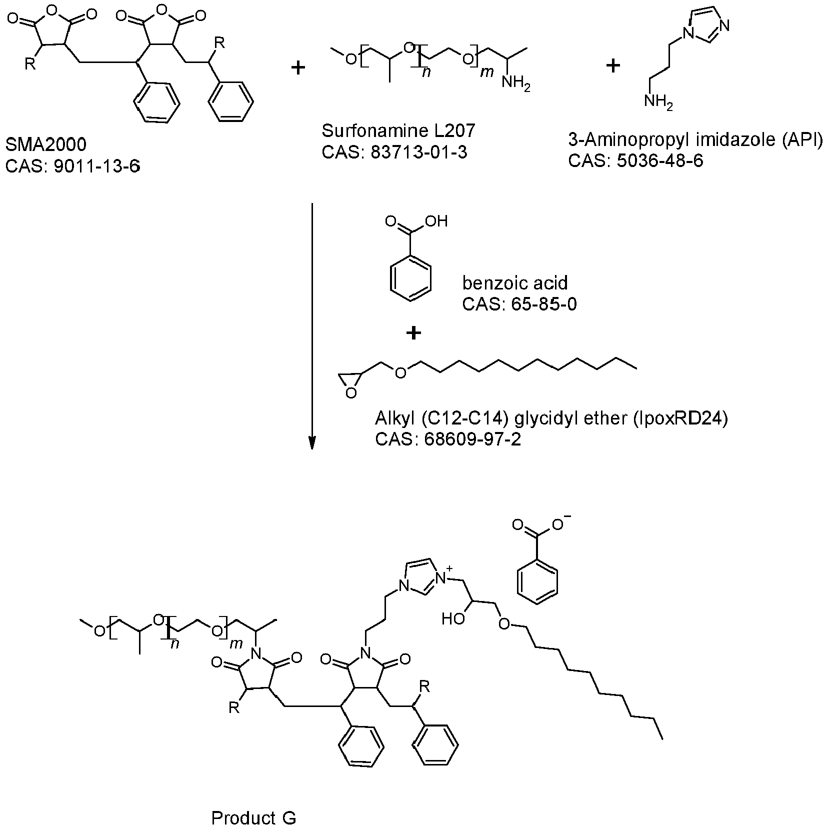

### Synthesis of product G

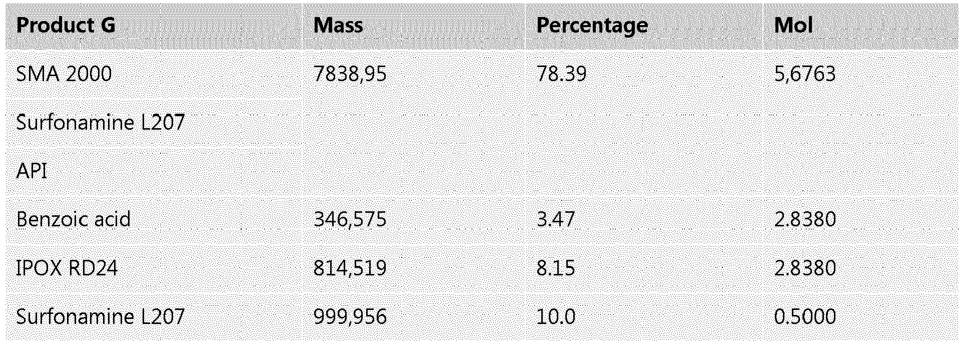

A mixture of SMA 2000, Surfonamine L207 and API (molar ratio 1:0.5:0.5) was charged in a reactor under nitrogen atmosphere. Benzoic acid was added and the mixture was heated until 135 °C and stirred until all benzoic acid was dissolved. IPOX RD24 was added and the reaction followed by epoxy-number. An exothermic reaction occurred and temperature increased to about 142 °C. After 1 hour at 135 °C the reaction was complete. An additional amount of Surfonamine L207 was added. Then the product was cooled and canned.

### Manufacturing Example 4

### Quaternized product based on PS-PAA polymer, Surfonamine L207 and API

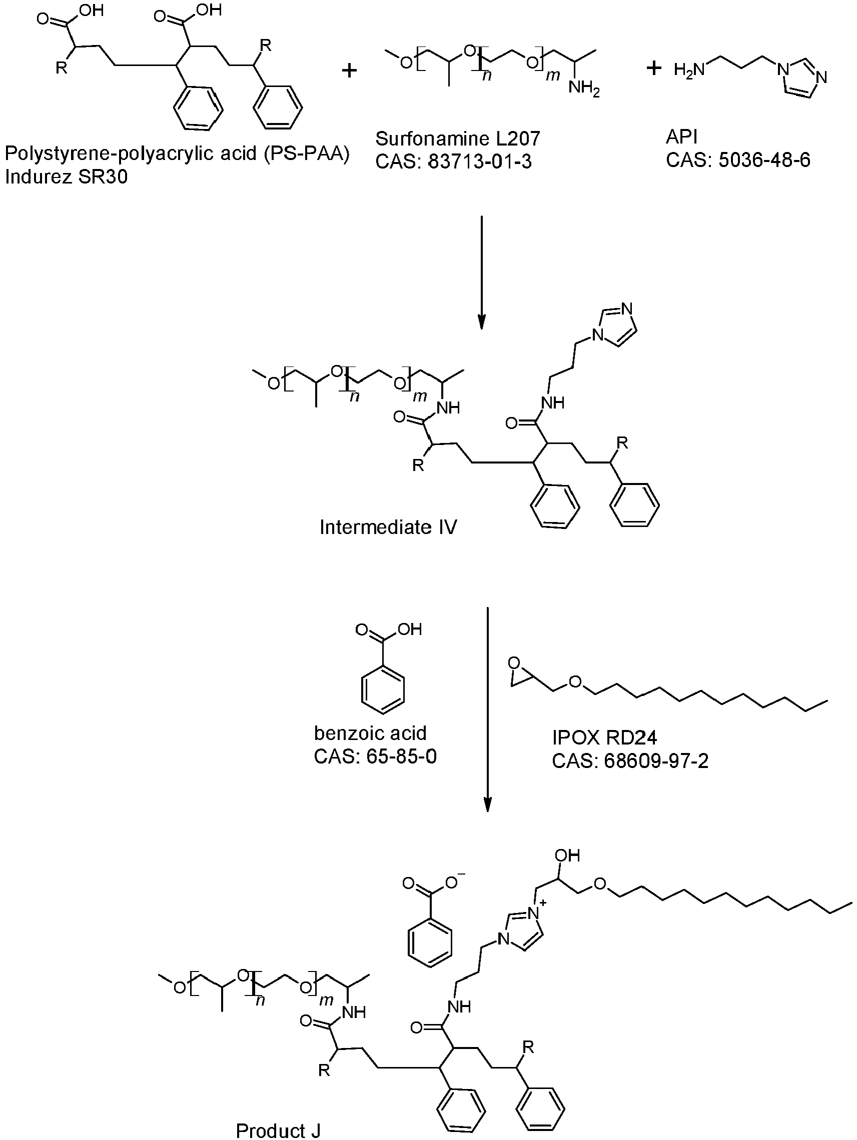

### Synthesis of intermediate IV

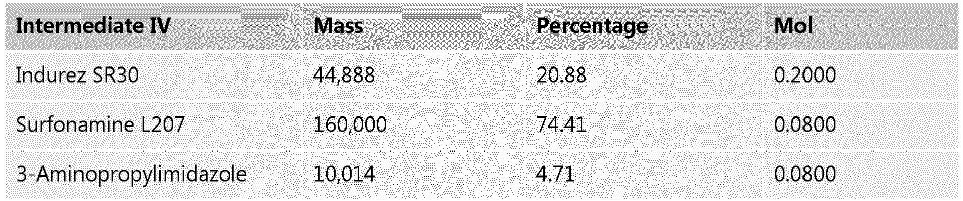

Indurez SR30 was mixed with Surfonamine L207 and put under vacuum at 210 °C for 1 hour. API was added and heating was continued for 4 hours. The reaction product was cooled to RT overnight under a nitrogen atmosphere. Subsequently it was re-heated to 210 °C for 3 hours, put under vacuum 45 mbar and stirred for another hour. Then it was cooled and canned.

### Synthesis of product J

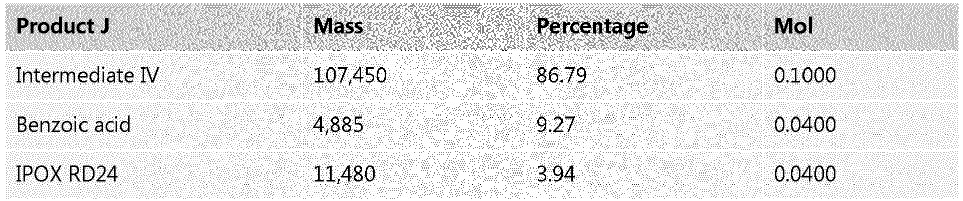

Intermediate IV was mixed with benzoic acid under a nitrogen atmosphere and heated to 100 °C. IPOX RD24 was added. The mixture was stirred for 2 hours at 100 °C and followed by epoxy-number until the reaction was considered to be complete. Then it was cooled and canned.

### Manufacturing Example 5

### Quaternized product based on SMA polymer, Surfonamine L207, polyglycol and API

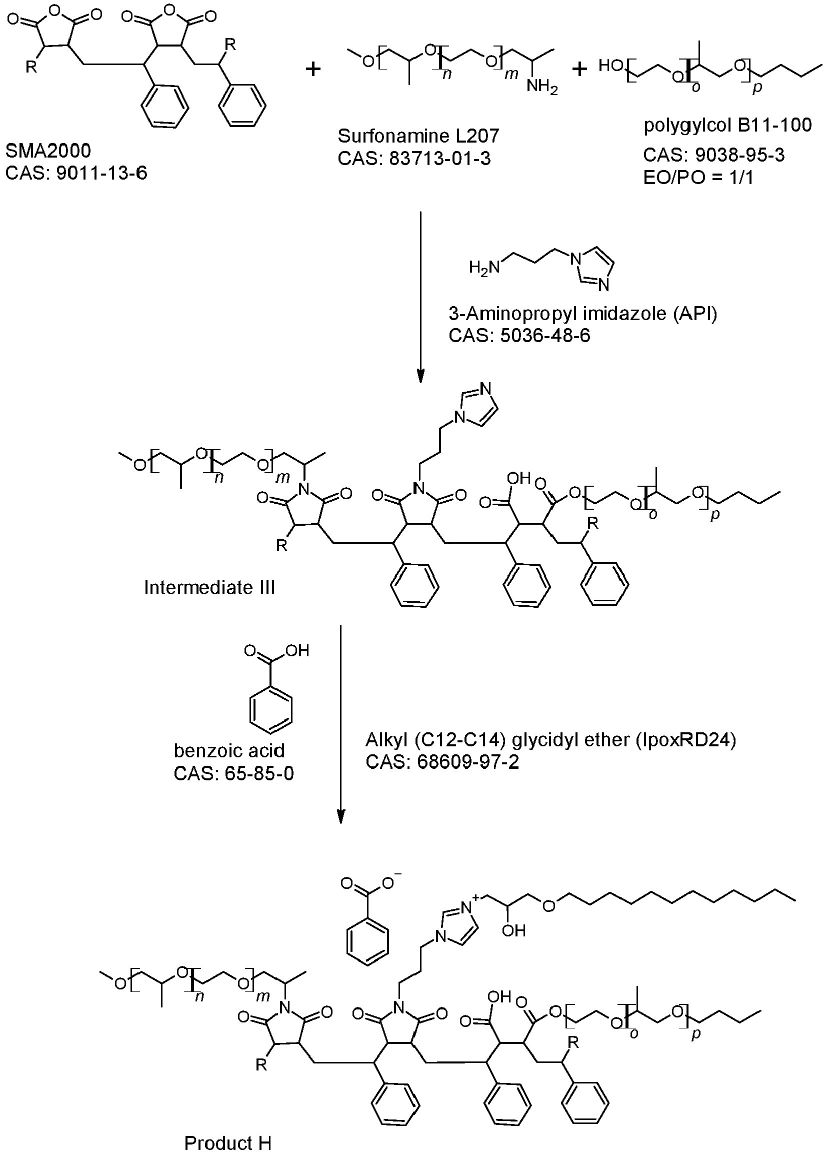

### Synthesis of intermediate III

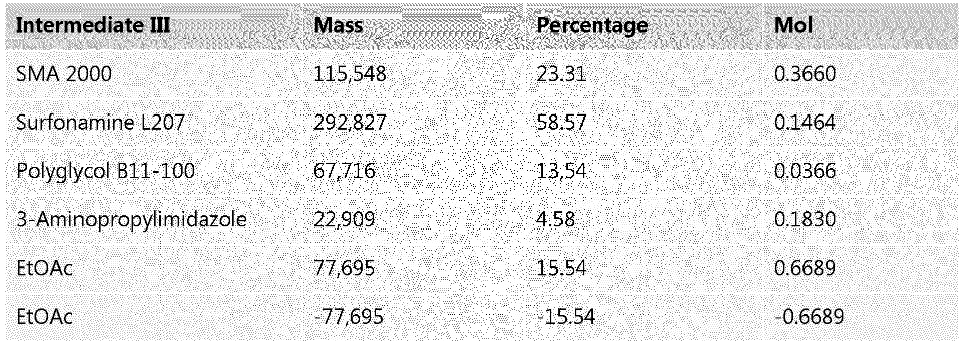

SMA 2000 was added in small batches over 2 minutes to ethyl acetate under a nitrogen atmosphere. The mixture was heated and stirred for 30 minutes until all SMA was dissolved. Surfonamine L207 and Polyglycol B11-100 were added under stirring at 60 °C for 15 minutes. Subsequently API was also added under vigorous agitation. The mixture became viscous and turned yellow-brown and later yellow. Temperature was increased stepwise to 160 °C and all solvent evaporated. Vacuum was applied towards 45 mbar and the mixture stirred for another 2 hours. Then the intermediate was cooled and canned.

### Synthesis of product H

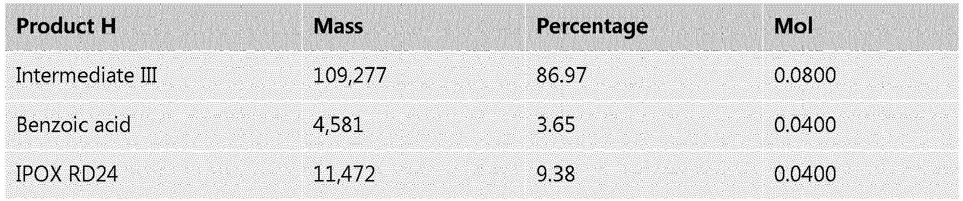

Intermediate III was charged in a reactor under nitrogen atmosphere. Benzoic acid was added and the mixture heated until 100 °C and stirred until all benzoic acid was dissolved. IPOX RD24 was added and the reaction followed by epoxy-number. The reaction became complete after 3 h. The final product was cooled and canned.

### Manufacturing Example 6

### Quaternized product based on PS-PAA polymer, Surfonamine L207 and DMAPA

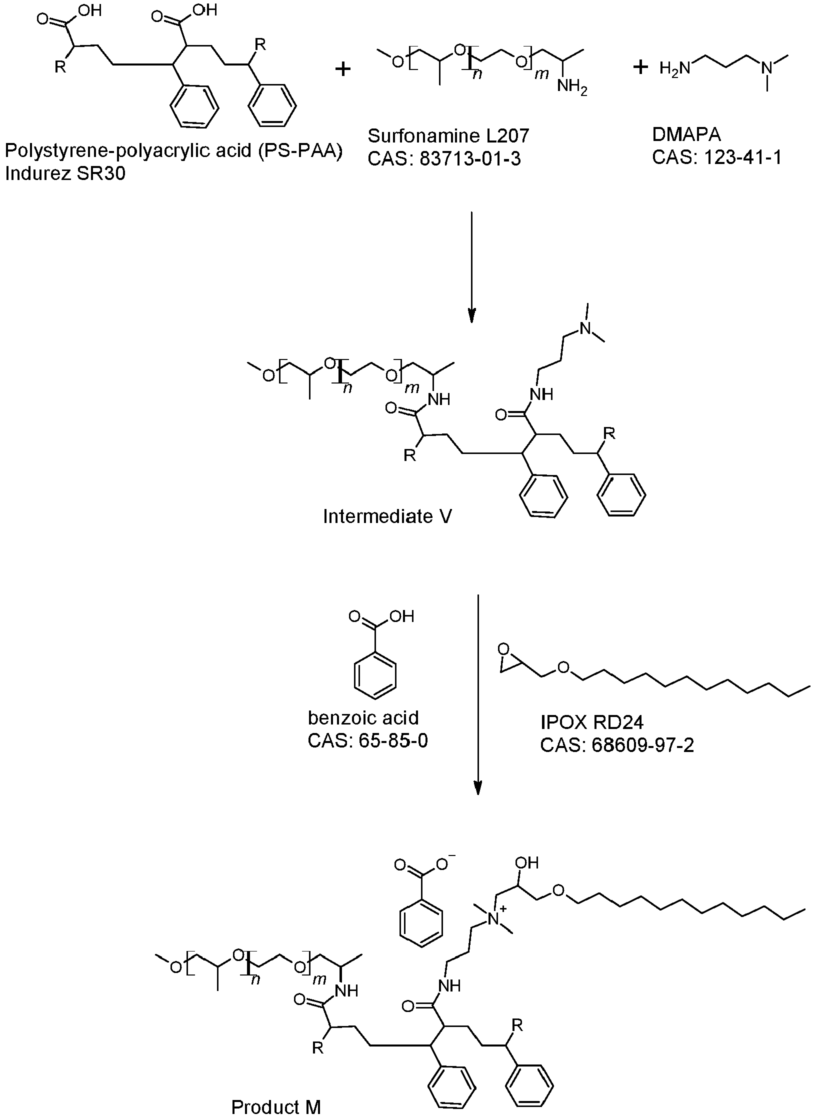

### Synthesis of intermediate V

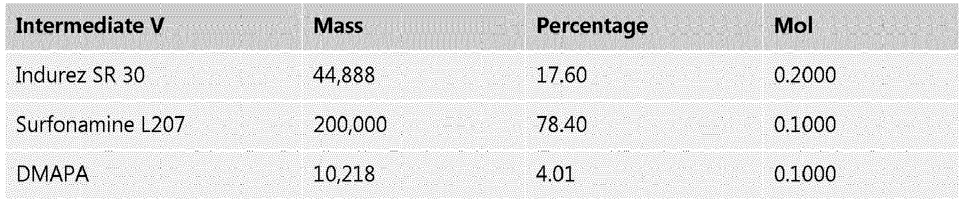

Indurez SR 30 was mixed with Surfonamine L207, heated to 190 °C and stirred for 30 minutes. The mixture was cooled to 120°C and DMAPA added. The mixture was then heated again to 210 °C for another 3 hours. It was cooled overnight and re-heated to 210 for another 3 hours. Then the mixture was out under vacuum 45b mbar for 30 minutes in order to distill off VOC at 210 °C. Then the intermediate was cooled and canned.

### Synthesis of product M

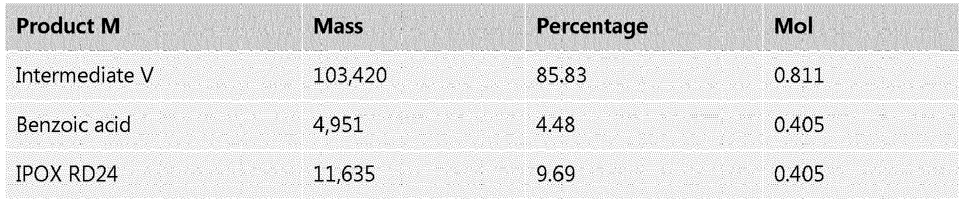

Intermediate V was mixed with benzoic acid and heated under nitrogen atmosphere to 130 °C. IPOX RD24 was added and the temperature increased to 130 °C. The mixture was stirred for 2 hours and followed by epoxy-number until completeness. The final product was cooled and canned.

### Manufacturing Example 7

### Quaternized product based on SMA polymer, Surfonamine L207 and APM

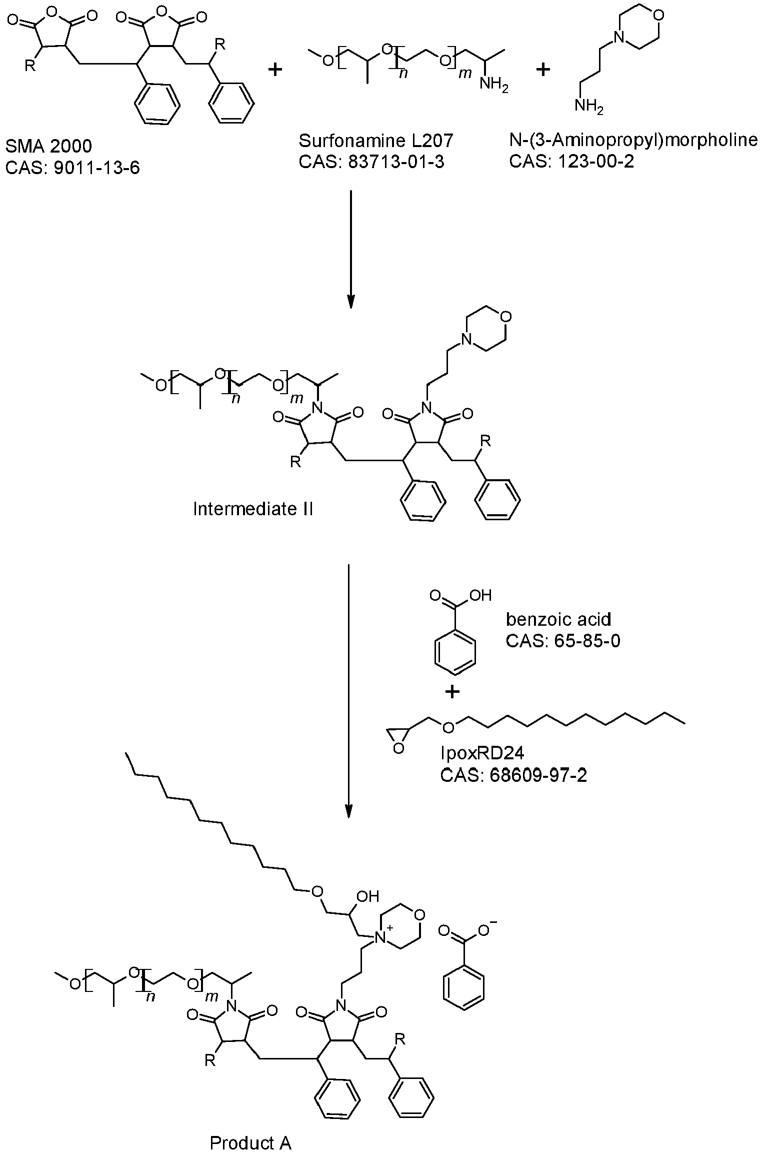

### Synthesis of intermediate II

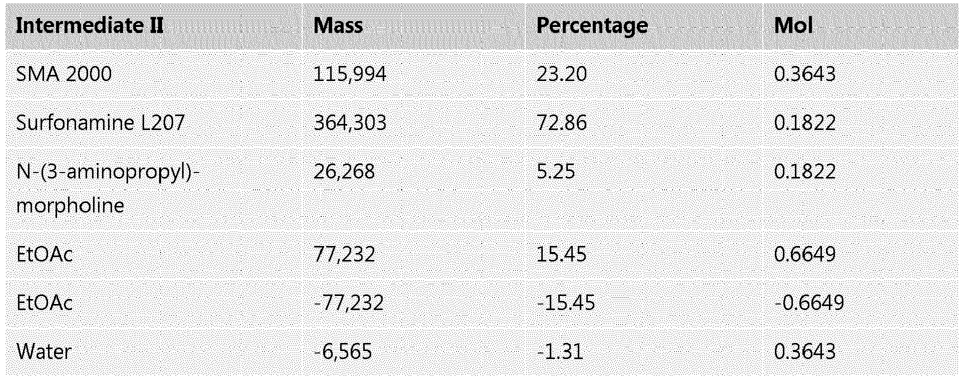

SMA 2000 was added in small batches over 2 minutes to ethyl acetate under nitrogen atmosphere. The mixture was heated to 70 °C and stirred for 30 minutes until all SMA was dissolved. A mixture of Surfonamine L207 and APM was added and the mixture was stirred for 15 minutes at 70 °C. Temperature was increased stepwise to 160 °C and all ethyl acetate evaporated. Vacuum was applied stepwise towards 45 mbar and the mixture was stirred for 2 hours. Finally, the intermediate was cooled and canned.

### Synthesis of product A

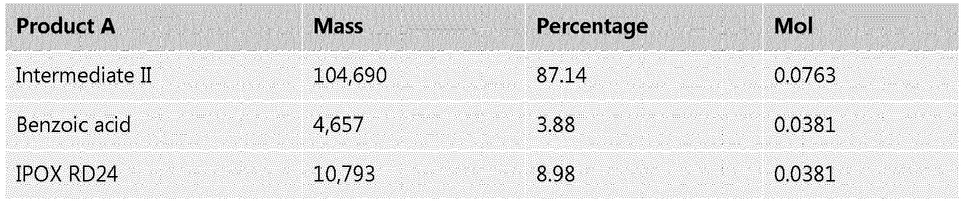

Intermediate II was mixed with benzoic acid and heated under nitrogen atmosphere to 160 °C. IPOX RD24 was added, the mixture stirred for 2 hours and followed by epoxy-number until completeness. The final product was cooled and canned.

### Manufacturing Example 8

### Quaternized product based on SMA polymer, Surfonamine L207 and L-carnitine

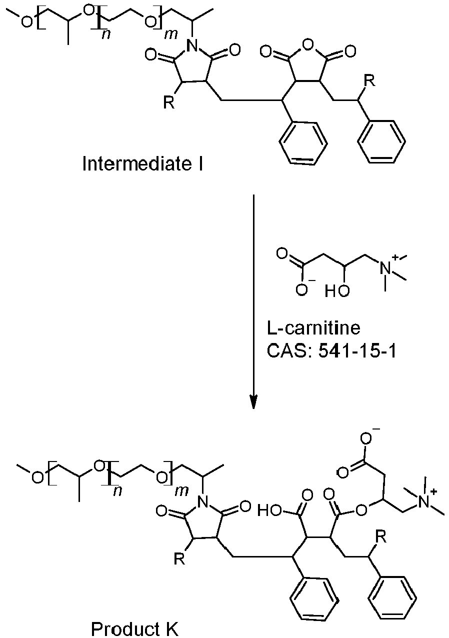

### Synthesis of quaternized product K

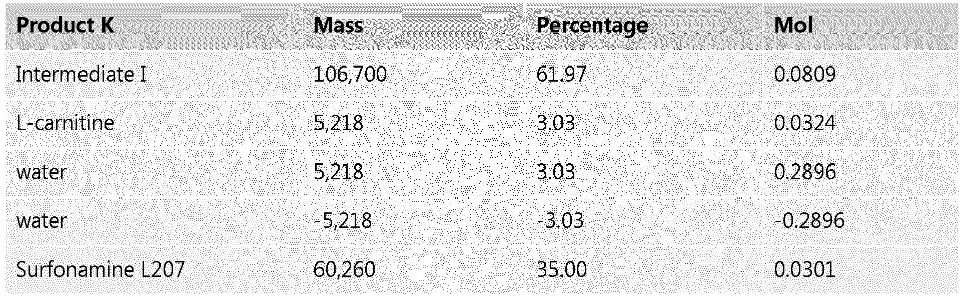

Intermediate I was blended with a mixture of L-carnitine/water (1:1). Water was distilled off at 100 °C under vacuum 45 mbar for 15 minutes. The reaction product was cooled to 90 °C. Surfonamine L207 was added in order to reduce product viscosity. The diluted mixture was cooled and canned.

### Manufacturing Example 9

### Quaternized polymer based on SMA polymer, Surfonamine L207 and choline - one pot reaction

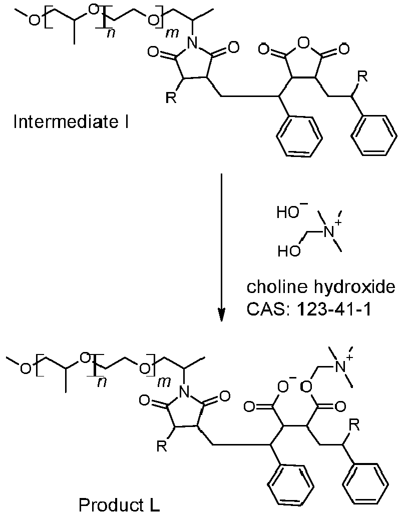

### Synthesis of product L

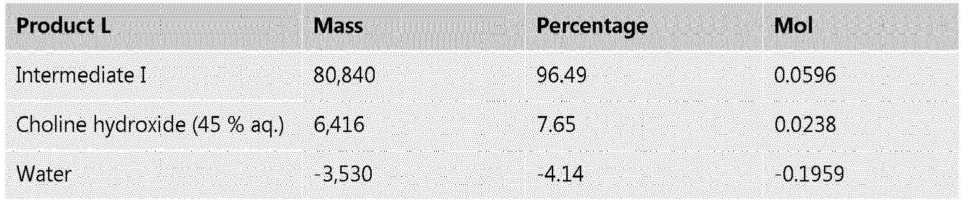

Intermediate I was heated to 80 °C. Choline was added and the mixture stirred for 15 minutes at 80 °C. Temperature was increased to 160 °C, and the water distilled off. The mixture was stirred for another hour at 160 °C under reduced pressure of 45 mbar. Subsequently the intermediate was cooled and canned.

### Manufacturing Example 10

### Quaternized product based on SMA polymer, Surfonamine L207 and sultaine

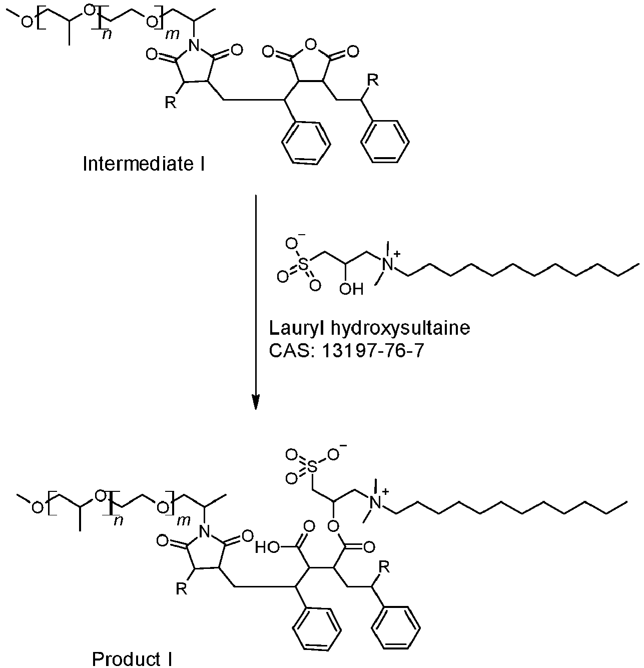

### Synthesis of product I

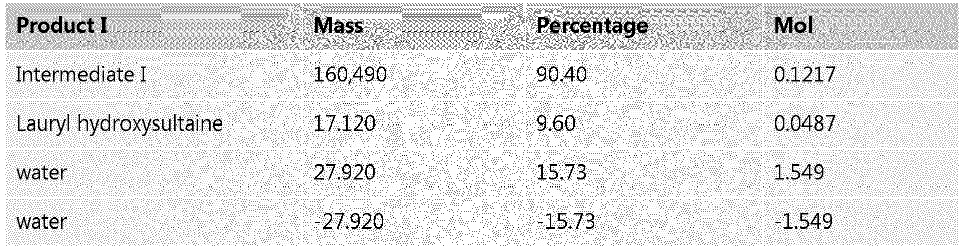

Intermediate I was heated to 95 °C and blended with a mixture of lauryl hydroxysultaine in water. Water was distilled off at 100 °C under reduced pressure. The reaction mixture was further heated to 150 °C under vacuum for 30 minutes and the product mixture was cooled and canned.

### Manufacturing Example 11

### Quaternized product based on SMA polymer, Surfonamine L207 and chloroacetic acid - one pot reaction

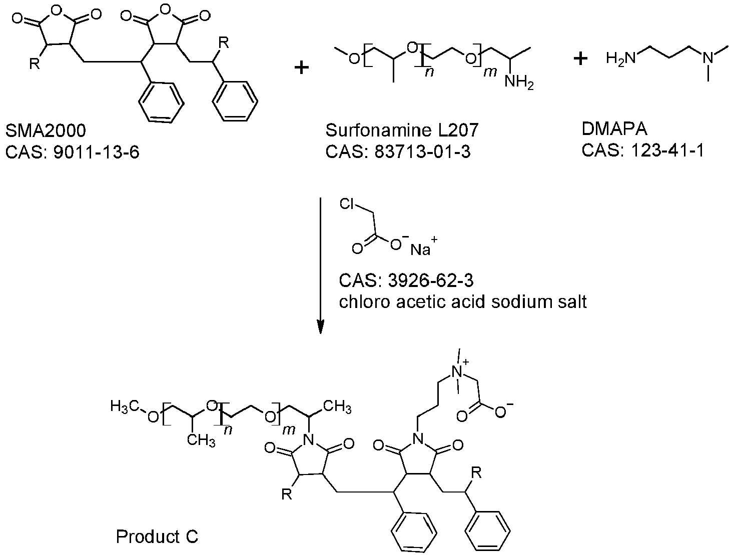

### Synthesis of product C

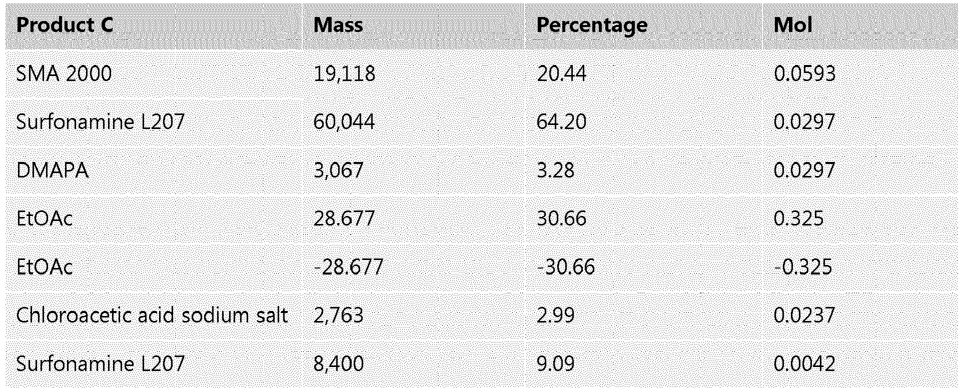

SMA 2000 was added in small batches over 2 minutes to EtOAc in the reactor under a nitrogen atmosphere. The mixture was heated to 60 °C and stirred for 15 minutes. Surfonamine L207 was added. Temperature was increased stepwise to 160 °C and all EtOAc was evaporated. Vacuum was applied slowly towards 45 mbar and the mixture was stirred for 2 hours. Subsequently the intermediate was cooled to 40 °C. Chloroacetic acid sodium salt was added and the mixture stirred at 95 °C for 2 hours. Finally, Surfonamine L207 was added to reduce viscosity. The diluted mixture was cooled and canned.

### APPLICATION EXAMPLES

The evaluated samples are shown Table 1. These samples are compared to each other based their performance in various coating systems.

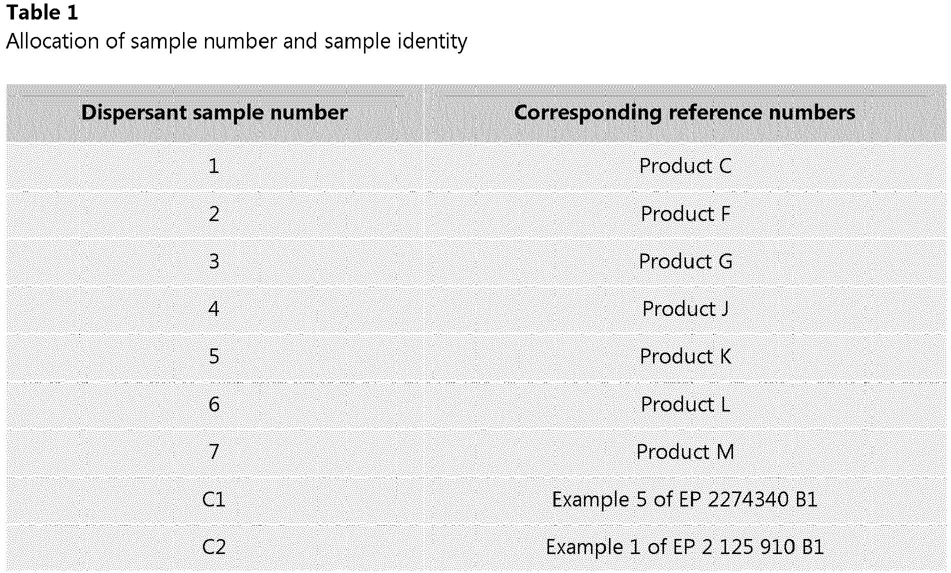

### Application Example A1

40 g of a pigment paste ("PR 122") was prepared by mixing the dibasic ester, the polyester resin, the melamine resin and the dispersant for 10 minutes using skandex mixer until the blend appeared to be homogenous (see **Table** 2).

The pigment was added together with 80g glass beads (size 2.8-3.2 mm) and put in skandex for 2 hours, grinding the pigment.

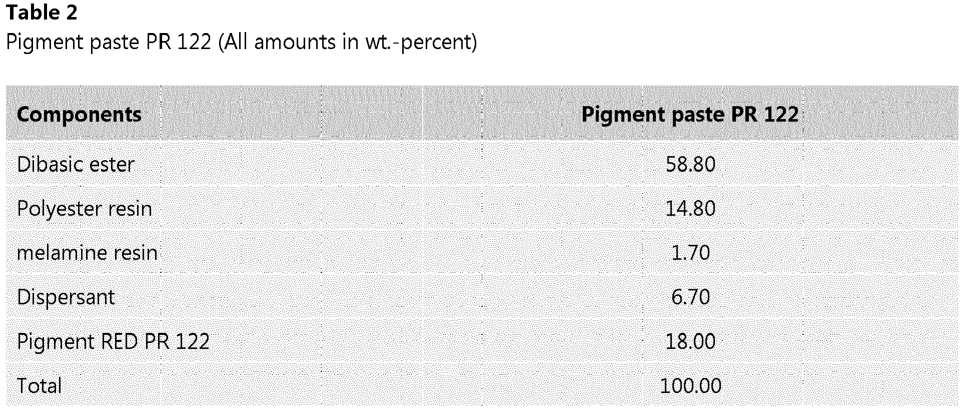

Evaluation of the pigment paste samples was done by comparing viscosity and color development. Viscosity was measured via flow curve on rheometer, comparing viscosity at shear rates; 1s-1, 10 s-1, 100s-1 and 500 s-1. Color development was measured via white reduction in a polyester varnish. The formulation of the final coating is shown in **Table 3.** The mixture, based 30g total weight, was mixed for 3 minutes using skandex and draw-down was made with 50µ wire bar on a glass plate. The coating was dried for 50 seconds in oven on 230°C.

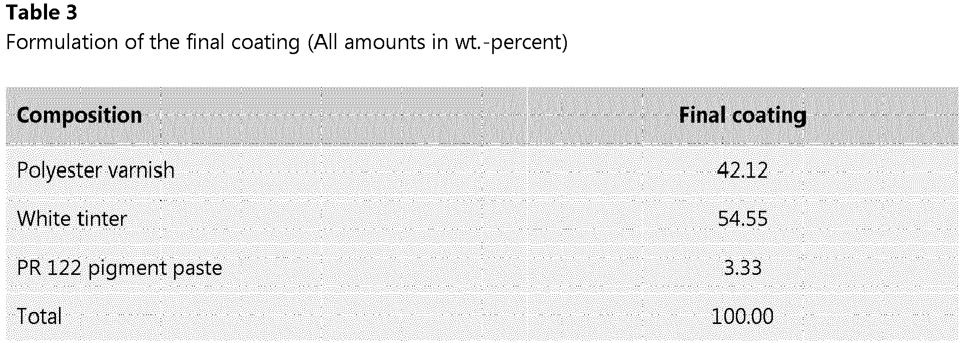

Results of Example 1 are shown in **Table 4,** aiming on lower viscosities and higher tinting strength.

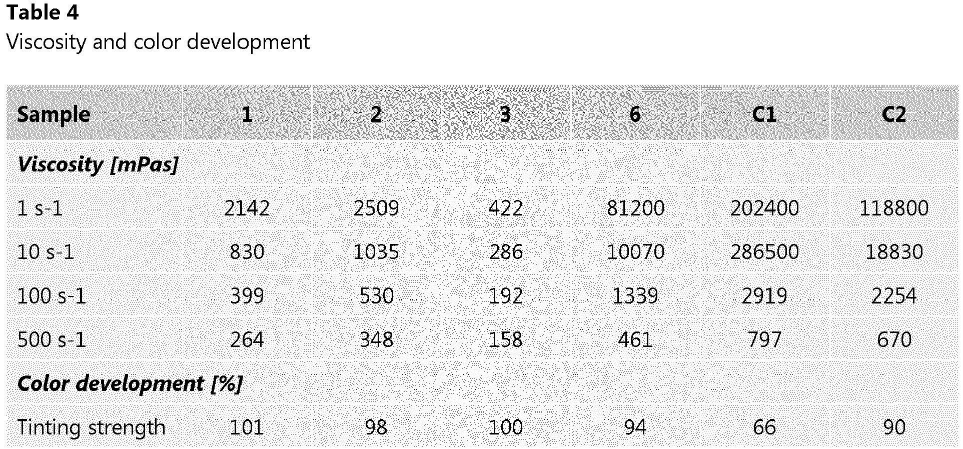

Adding of the dispersants according to the invention resulted in very low viscosities which were found stable even after storage of the formulations for 2 months at 25 °C. All compositions showed an improved tinting strength compared to products found in the market. The corresponding products from the market showed higher viscosities and lower tinting strength.

### Application Example A2

The samples from **Table 1** are compared with each other in solvent free UV-sensitive coating systems in solvent free pigment pastes. Based on monomer mixture of TPGDA and HDDA with pigments; emperor black 1600 (PbK7), Hostaperm rosa E (PR 122) and Vanadur yellow 2108 (PY 184). Evaluation of the pigment paste samples is done by comparing viscosity and color development. The formulations of the pigment pastes are prepared following the formulation from **Table 5.**

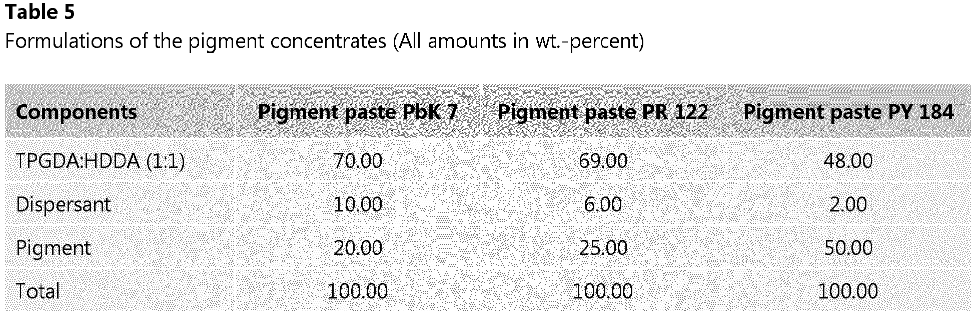

40 g total weight of the pigment paste is made as follows; TPGDA, HDDA and dispersant are mixed for 10 minutes using skandex mixer (the mixture is visual homogenous mixed). Pigment is added together with 80 g glass beads (size 2.8-3.2mm) and put in skandex for 2 hours, grinding the pigment.

Viscosity is measured via flow curve on rheometer, comparing viscosity at shear rates; 1s-1, 10 s-1, 100s-1 and 500 s-1. Color development is measured via white reduction in an UV-curing coating. The formulation of base coating A is shown in **Table 6.** The color mixture based 3% pigment concentrate, 30g total weight, is mixed for 3 minutes using skandex. A draw-down is made with 30µ block applicator on a glass plate and the coating is UV cured based intensity of ∼1200 mJ/cm2.

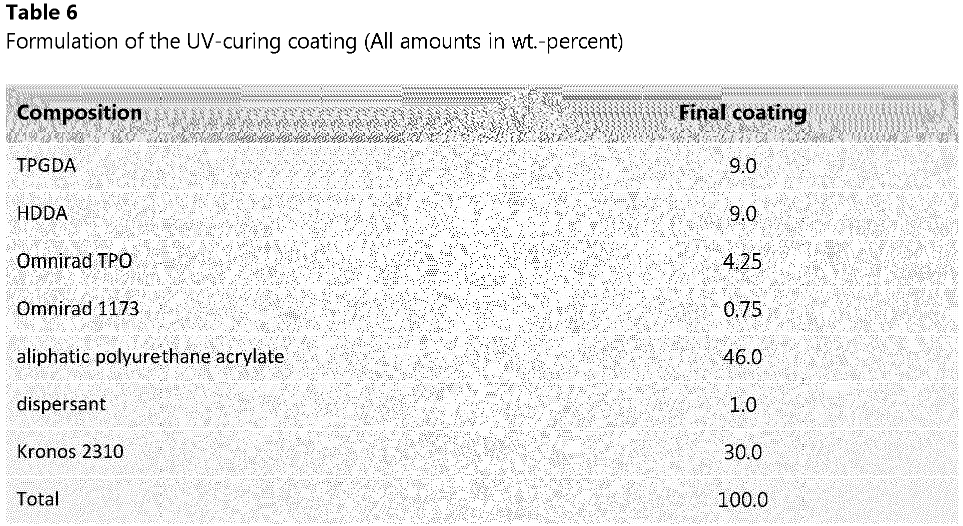

Results of Example 2 are shown in **Tables 7 to 9,** aiming on lower viscosities and higher tinting strength.

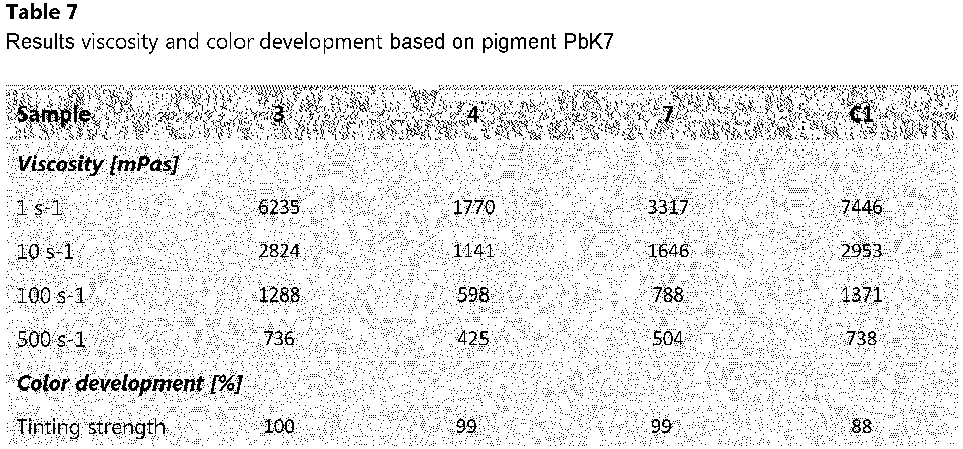

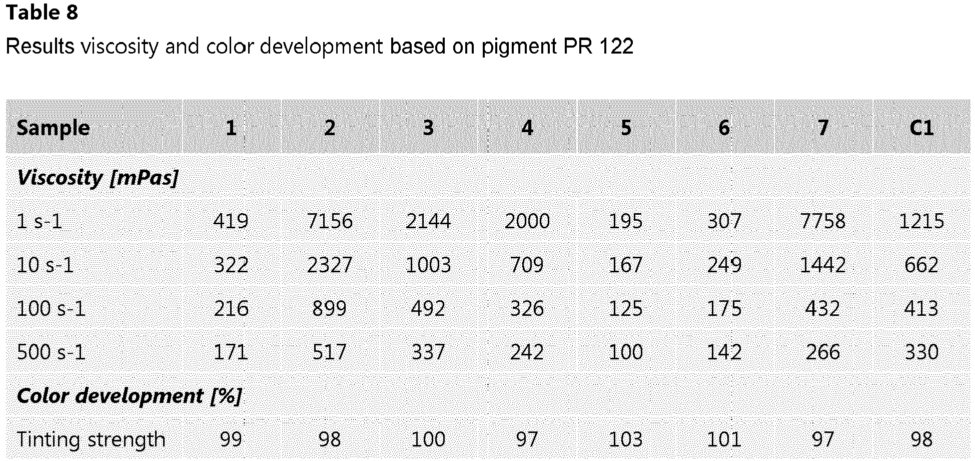

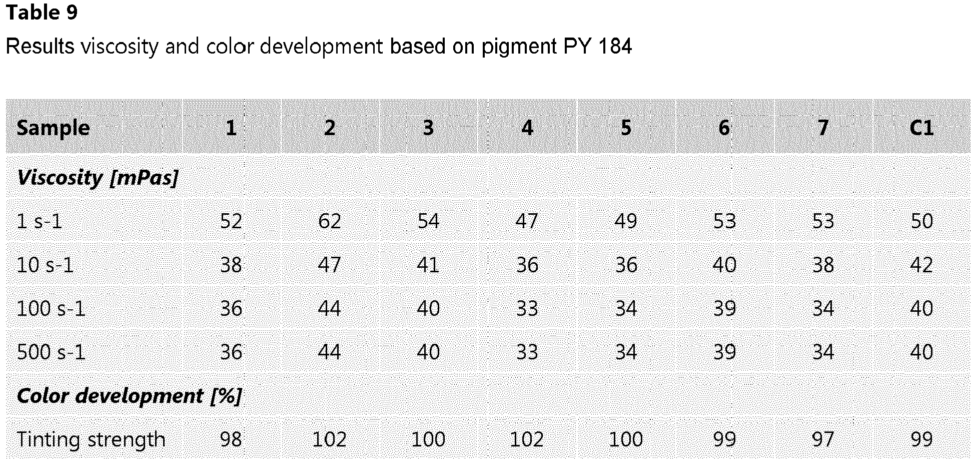

## Claims

**1.** Polymers obtainable or obtained by the following steps:
(a) providing at least one copolymer of
(a1) styrene and
(a2) at least one unsaturated monomer;
(b) providing at least one amino polyalkyleneglycol ether and optionally
(c) providing at least one further compound selected from the group consisting of
(c1) polyalkylene glycol ethers,
(c2) diamines, and
(c3) quaternary ammonium compounds;
(d) reacting components (a), (b) and optionally (c) in order to obtain an intermediate pre-polymer;
(e) providing at least one further reactant selected from the group consisting of
(e1) aromatic carboxylic acids,
(e2) amidoamines,
(e3) imino compounds,
(e4) glycidyl ethers,
(e5) polyalkyleneglycol ethers,
(e6) betaines and
(e7) quaternary ammonium compounds; and
(f) reacting said first intermediate pre-polymer with at least one further reactant (e) to obtain the final product.

**2.** The polymers of Claim 1, wherein the copolymers of styrene and at least one unsaturated monomer (compound a) represent copolymers of styrene and (meth)acrylic acid and/or maleic acid anhydride.

**3.** The polymers of Claim 1, wherein the amino polyalkylene glycol ethers (b) follow formula (II)
R¹(OCH₂CHR²)ₙ(CH₂)ₘCHR³-NH₂ (II)
in which R¹, R² and R³ individually stand for hydrogen or an C₁-C₄ alkyl group, n represents an integer of from 5 to 50 and m stands for zero, 1 or 2.

**4.** The polymers of Claim 1, wherein the polyalkyleneglycol ethers (c1) or (e5) follow formula (III)
R¹(OCH₂CHR²)ₙH (III)
in which R¹ stands for hydrogen or an C₁-C₄ alkyl group and n represents an integer of from 5 to 50.

**5.** The polymers of Claim 1, wherein the diamines (c2) follow formula (IV)
NH₂(CH₂)ₚNR⁴R⁵ (IV)
in which R⁴ and R⁵ individually stand for hydrogen or a C₁-C₁₀ alkyl group or form a hetero-aromatic ring system with 5 or 6 members, optionally incorporating at least one further hetero atom selected from nitrogen and oxygen, and p stands for an integer of from 1 to 10.

**6.** The polymers of Claim 1, wherein the quaternary ammonium compounds (c3) or (e7) follow formula (V)
[R⁶R⁷R⁸N⁺R⁹] X⁻ (V)
in which R⁶, R⁷ and R⁸ individually stand for an alkyl group having 1 to 10 carbon atoms, R⁹ stands for an hydroxy-substituted alkyl or acyl group having 2 to 20 carbon atoms and X represents halogenide, hydroxyl or carboxylate.

**7.** The polymer of Claim 1, wherein the aromatic acids (e1) are selected from the group consisting of benzoic acid and salicylic acid.

**8.** The polymer of Claim 1, wherein the amidoamines (e2) follow formula (VI)
R¹⁰CO-NH(CH₂)_{q}NR¹¹R¹² (V)
in which R¹⁰CO stands for a linear or branched, saturated or unsaturated optionally hydroxy-substituted C₆-C₂₂ acyl radical, R¹¹ and R¹² individually stand for hydrogen or a C₁-C₁₀ alkyl group or form a hetero-aromatic ring system with 5 or 6 members, optionally incorporating at least one further hetero atom selected from nitrogen and oxygen, and q stands for an integer of from 1 to 10.

**9.** The polymer of Claim 1, wherein the imino compounds (e3) follow formula (VI)
HN[(CH₂)ₜNR¹³R¹⁴]₂ (VII)
in which R¹³ and R¹⁴ individually stand for hydrogen or a C₁-C₁₀ alkyl group or form a hetero-aromatic ring system with 5 or 6 members, optionally incorporating at least one further hetero atom selected from nitrogen and oxygen, and t stands for an integer of from 1 to 10.

**10.** The polymer of Claim 1, wherein the glycidyl ethers (e4) follow formula (VIII)
P-OR¹⁵ (VIII)
In which P stands for a 1,2-propyleneoxide group and R¹⁵ for a linear or branched, saturated or unsaturated optionally hydroxy-substituted alkyl or alkenyl group with 3 to 20 carbon atoms.

**10.** The polymer of Claim 1, wherein the betaines (e6) follow formula (IX)
[R¹⁶R¹⁷N⁺R¹⁸R¹⁹] X⁻ (IX)
in which R¹⁶ and R¹⁷ individually stand for an alkyl group having 1 to 5 carbon atoms, R¹⁸ stands for an alkyl group having 1 to 22 carbon atoms, R¹⁹ for an -(A)-COO⁻ or - (A)-SO₃⁻ group, A for an optionally hydroxy-substituted alkylene group having 1 to 5 carbon atoms and X represents halogenide, hydroxyl or carboxylate.

**11.** A process for making polymers, encompassing or consisting of the following steps:
(a) providing at least one copolymer of
(a1) styrene and
(a2) at least one unsaturated monomer;
(b) providing at least one amino polyalkyleneglycol ether and optionally
(c) providing at least one further compound selected from the group consisting of
(c1) polyalkylene glycol ethers,
(c2) diamines, and
(c3) quaternary ammonium compounds;
(d) reacting components (a), (b) and optionally (c) in order to obtain an intermediate pre-polymer;
(e) providing at least one further reactant selected from the group consisting of
(e1) aromatic carboxylic acids,
(e2) amidoamines,
(e3) imino compounds,
(e4) glycidyl ethers,
(e5) polyalkyleneglycol ethers,
(e6) betaines and
(e7) quaternary ammonium compounds; and
(f) reacting said first intermediate pre-polymer with at least one further reactant (e) to obtain the final product.

**12.** The process of Claim 11, wherein the preparation of the intermediate and/or the final polymer is conducted in the presence of an aprotic solvent.

**13.** The process of Claim 11, wherein the reaction is conducted as a one-pot-process without isolating the intermediate pre-polymer of step (d).

**14.** A method for dispersing a solid pigment in a liquid lacquer or paint encompassing or consisting of the following steps:
(i) providing a liquid lacquer or paint comprising solid pigments,
(ii) adding a working amount of at least one polymer of Claim 1 optionally under agitation.

**15.** The use of the polymers according to Claim 1 as dispersants, particularly for liquid lacquers and paints
